# EUROPÄISCHE PATENTSCHRIFT

(11) **EP 3 622 254 B1**
(45) Veröffentlichungstag und Bekanntmachung des Hinweises auf die Patenterteilung: **05.07.2023**
(21) Anmeldenummer: 18724220.1
(22) Anmeldetag: 09.05.2018
(51) Int. Cl.: G01D 5/20, G01P 3/48, F02D 41/00, G01P 3/488, F02D 41/28

(54) **MESSANORDNUNG ZUR MESSUNG EINER POSITION UND/ODER EINER DREHZAHL EINER WELLE**
MEASURING ARRANGEMENT FOR MEASURING A POSITION AND/OR A ROTATIONAL SPEED OF A SHAFT
DISPOSITIF DE MESURE POUR MESURER UNE POSITION ET/OU UNE VITESSE DE ROTATION D'UN ARBRE ROTATIF

(30) Priorität: 12.05.2017 DE 102017110391
(43) Veröffentlichungstag der Anmeldung: 18.03.2020
(73) Patentinhaber: Rheinmetall Air Defence AG, 8050 Zürich (CH)
(72) Erfinder: FRICK, Henry Roger, 8442 Hettlingen (CH)
(74) Vertreter: Kirschner, Sebastian
(86) Internationale Anmeldenummer: PCT/EP2018/062113
(87) Internationale Veröffentlichungsnummer: WO 2018/206707

(56) Entgegenhaltungen:
- EP-A1- 2 666 696
- DE-A1- 19 800 380
- FR-A1- 2 688 586
- GB-A- 2 231 161
- US-A- 4 868 468
- US-A- 5 621 179

## Beschreibung

Die Erfindung betrifft eine Messanordnung zur Messung einer Position und einer Drehzahl einer Welle, mit den Merkmalen des Patentanspruches 1.

Die Messanordnung ist geeignet, die Position und/oder die Drehzahl einer sich drehenden oder stehenden Welle zu bestimmen. Die Welle ist in einer Maschine wie zum Beispiel einem Strahltriebwerk, einem Kompressor oder einer Gas-/Dampf-Turbine angeordnet. In bevorzugter Ausgestaltung wird ferner auch das Vibrationsverhalten der Welle mit der Messanordnung und dem Verfahren überwacht. Besonderes Einsatzgebiet der vorgeschlagenen Messanordnung und des Verfahrens ist die Positions- und/oder Drehzahlmessung einer Welle, welche durch ein Magnetlager gelagert ist.

Aus der EP 1 875 172 B1 sind eine Magnetlagervorrichtung und ein Abstandssensor in Form eines Wirbelstromsensors für die Magnetlagervorrichtung bekannt. Mittels der Magnetlagervorrichtung ist eine Welle drehbar gelagert. Auf der Welle ist eine Zugscheibe montiert. Eine erste aktive axiale Magnetlagereinheit ist auf einer Seite der Zugscheibe angeordnet. Eine axiale Verschiebung der Zugscheibe relativ zur ersten axialen Magnetlagereinheit ist ermittelbar. Der Abstandssensor weist eine Gruppe von mehreren Sensorspulen auf. Die Sensorspulen sind in der Nähe der Zugscheibe kreisförmig und konzentrisch zur Welle angeordnet, so dass die Sensorspulen zu einer elektromagnetischen Wechselwirkung mit der Zugscheibe fähig sind. Es werden Hochfrequenzströme mit einer Frequenz von mindestens 100 kHz an die Sensorspulen abgegeben.

Bei der Nutzung der Wirbelströme regt der magnetische Sensor Wirbelströme auf dem zu detektierenden Bauteil an. Dabei wird ein sekundäres, magnetisches Feld erzeugt, welches auf die Spulen wirkt. Somit ändert sich die von außen betrachtete Induktivität der Spule im magnetischen Sensor. Wird nun die Spule in einem elektrischen Netzwerk mit Kapazitäten eingefügt, so kann das elektrische Netzwerk als Schwingkreis betrachtet werden. Ändert sich durch die Positionsänderung des Bauteils die Induktivität, so ändert sich auch die Resonanzfrequenz. Wird die Resonanzfrequenz von einem externen System überwacht, so kann anhand der Resonanzfrequenz die Bauteilposition gemessen werden.

Aus der WO 2015/052016 A1 ist eine kontaktlose Messanordnung zur Bestimmung von Rotorverschiebungen bekannt. Zwei Sensorspulen wirken mit einer Oberfläche des Rotors zusammen. Eine Brückenschaltung ist dabei durch die Sensorspulen und zwei Sekundärwicklungen eines Eingangsübertragers gebildet. An der Primärwicklung des Eingangsübertragers liegt ein Erregungssignal an. Ein Ausgangssignal wird an einem Ausgangsabgriff gemessen, der durch einen gemeinsamen Knoten zwischen den Spulen bzw. zwischen den Sekundärwicklungen des Eingangstransformators gebildet wird.

Die GB 2 231 161 A1 offenbart eine Messanordnung für eine Winkelposition einer Welle. Eine Sendespule dient zur Erzeugung eines elektromagnetischen Feldes. Die Welle trägt eine nicht rotationssymmetrische Hülse in einer Messsektion. Es sind zwei Sekundärspulen vorhanden, die gegensinnig gewickelt sind.

In der US 5,621,179 A wird eine Messanordnung mit Primärspulen offenbart, die mit einer Wechselspannungsquelle verbunden sind. Zwei Sekundärspulen sind koaxial zu den beiden Bereichen der Primärspulen angeordnet. Die Welle weist einen nicht rotationssymmetrischen Querschnitt auf.

Aus der EP 2 666 696 A1 ist ein Neigungssensor für einen Zug unbekannt. Der Neigungssensor weist einen Rotor und einen Stator auf.

Aus der DE 198 00 380 A1 ist eine induktive Winkelmessvorrichtung bekannt. Eine Messspule ist aus einem ersten und einem zweiten Spulenring gebildet, welche gegensinnig gewickelt und koaxial zueinander angeordnet sind. Jeder Spulenring ist in jeweils einen ersten und einen zweiten Spulenabschnitt unterteilt, die sich jeweils diametral gegenüberliegen. Die Wicklungen der beiden Spulenringe überkreuzen sich derart, dass der erste Spulenabschnitt des ersten Spulenringes in einer Achsrichtung der Spulenachse axial versetzt vor dem ersten Spulenabschnitt des zweiten Spulenringes und der zweite Spulenabschnitt des ersten Spulenringes in der gleichen Achsrichtung axial versetzt hinter dem zweiten Spulenabschnitt des zweiten Spulenringes angeordnet ist. Ein Messkörper ist rotierbar innerhalb der Messspule angeordnet. Um eine drehwinkelabhängige Beeinflussung der Induktivitäten der Spulenringe zum Erzeugen eines Messsignals zu ermöglichen, weist der Messkörper einen äußeren etwa halbzylindrisch ausgebildeten ersten Zylinderabschnitt auf, welcher sich über einen Umfangswinkel von etwa 180° erstreckt. Diesem ersten Zylinderabschnitt liegt ein sich ebenfalls über 180° in Umfangsrichtung erstreckender Zylinderwandabschnitt diametral gegenüber, welcher in seinem Außendurchmesser r kleiner ausgebildet ist, als der Außendurchmesser R des ersten Zylinderabschnittes. Axial beabstandet befindet sich analog ein zweiter äußerer Zylinderabschnitt großen Außendurchmessers R, welcher sich ebenfalls über einen Umfangswinkel von etwa 180° erstreckt, wobei dieser zweite Zylinderabschnitt axial versetzt und diametral dem ersten Zylinderabschnitt gegenüberliegt.

Der Stand der Technik ist noch nicht optimal ausgebildet. Fördern zum Beispiel Turbomaschinen aggressive, heiße Medien unter hohem Druck, so müssen die Sensoren robust aufgebaut sein und geschützt werden. Dies stellt einen Kostenfaktor dar. Die magnetischen Sensoren bestehen meist aus einer Spule mit einem Kern. Die Spule oder die Spulen werden durch mehrfache Umwicklung des Kerns mit einem elektrisch leitenden Draht gebildet. Die Qualität der Spule ist direkt vom Wickelvorgang anhängig. Meist genügt es nicht, nur eine Wicklung zu haben, da nur durch mehrere Wicklungen eine genügend hohe Signalspannung und somit eine auswertbare Impedanz erreicht wird. Somit kommt der Herstellung der Wicklung besondere Bedeutung zu und dementsprechend muss der Wickelvorgang sorgfältig durchgeführt werden. Daher sind die Herstellungskosten für Spulen mit vielen Wicklungen höher als für Spulen mit nur wenigen Wicklungen.

Der Erfindung liegt daher die Aufgabe zugrunde, die Messanordnung zu verbessern.

Diese der Aufgabe zugrunde liegende Erfindung wird nun durch eine Messanordnung mit den Merkmalen des Patentanspruches 1 gelöst.

Die Welle ist zumindest teilweise in einem Hohlleiter angeordnet. Eine Sendespule und mehrere von der Sendespule beabstandete Empfangsspulen sind in dem Hohlleiter angeordnet. Mittels der Sendespule ist ein elektromagnetisches Feld erzeugbar. Das elektromagnetische Feld ist von den Empfangsspulen empfangbar. An der Sendespule liegt hierzu ein elektrisches Signal an. Das elektrische Signal weist eine Trägerfrequenz auf.

Diese Trägerfrequenz des elektrischen Signals liegt unterhalb der kleinsten Grenzfrequenz des Hohlleiters. Dies hat den Vorteil, dass das erzeugte, elektromagnetische Feld sehr stark örtlich konzentriert ist. Somit kann im Hohlleiter keine Wellenausbreitung stattfinden und lediglich ein vernachlässigbarer Anteil der elektromagnetischen Energie verlässt den Hohlleiter. Vernachlässigbar bedeutet in diesem Zusammenhang, dass die Messanordnung keine anderen im Motor oder im Fahrzeug vorhandenen elektronischen Geräte in ihrer Arbeitsweise stört oder beeinträchtigt.

Es wird hierbei nicht mehr die Induktivitätsänderung und damit die verbundene Resonanzfrequenzänderung gemessen, sondern die Empfangsspulen, welche von der Sendespule getrennt sind, empfangen jeweils ein Signal mit einer Amplitudenänderung. Die Trägerfrequenz ist so zu wählen, dass ein genügend hoher Pegel der induzierten Spannung in den Empfangsspulen erzeugt wird. Somit genügt es, Spulen - nämlich entsprechende Empfangs- und vorzugsweise auch Sendespulen - mit nur einer Windung einzusetzen. Hierdurch sind die Herstellungskosten reduziert.

Es wird nun ein Maß für die Drehstellung der Messsektionen aufgrund der Änderung eines empfangenen Signals der Empfangsspulen und ein Maß für die radiale Position und/oder der axialen Position der Welle bestimmt. Es werden vier Kanäle zur Erfassung der longitudinalen Position der Welle (Z-Richtung), der radialen Position der Welle (X- und Y-Richtung) und der Drehzahl der Welle bereitgestellt. Ferner wird in bevorzugter Ausgestaltung noch das Vibrationsverhalten erfasst. Es sind vorzugsweise vier Empfangsspulen vorhanden.

Vorzugsweise sind jeweils zwei Empfangsspulen in einer Ebene angeordnet. Die Ebenen erstrecken sich in radialer Richtung der Welle. Die erste Ebene mit zwei Empfangsspulen liegt dabei beabstandet auf einer Seite der Sendespule und die andere, zweite Ebene mit den anderen beiden Empfangsspulen liegt parallel zur ersten Ebene auf der anderen Seite der Sendespule. Die beiden Ebenen liegen axial vorzugsweise gleich beabstandet zur Sendespule. Die Empfangsspulen sind als Drahtschlaufen ausgebildet. Die Empfangsspulen erstrecken sich dabei mit einem Abschnitt kreisbogensegmentförmig um die Welle.

Im Folgenden beschreibt die X-Richtung bzw. X-Achse eine erste radiale Richtung zur Welle und eine Y-Richtung bzw. eine Y-Achse eine zweite radiale Richtung zur Welle. Die X-Achse und die Y-Achse stehen vorzugsweise senkrecht zueinander, können jedoch auch einen Winkel kleiner als 90 Grad einschließen. Die Z-Richtung oder Z-Achse erstreckt sich in axialer Richtung der Welle.

Zur Bestimmung der radialen Position in einer ersten radialen Richtung (X-Richtung) sind zwei der Empfangsspulen in einer ersten radialen Ebene diametral in X-Richtung beabstandet zur Welle angeordnet. Zur Bestimmung der radialen Position in einer zweiten radialen Richtung (Y-Richtung) sind zwei weitere Empfangsspulen in einer radialen Ebene diametral in Y-Richtung beabstandet zur Welle angeordnet. Ein Empfangsspulenpaar liegt dabei in X-Richtung beabstandet und insbesondere symmetrisch zur Y-Z-Ebene. Das andere Empfangsspulenpaar liegt dabei in Y-Richtung beabstandet und insbesondere symmetrisch zur X-Z-Ebene.

Für die Ausgangssignalbildung werden für die drei Kanäle die Differenzen der momentanen Signalspannungen gebildet. Drei Kanäle sind dabei der X-, Y- und Z-Achse zugeordnet. Es werden nun Differenzsignale aus den Signalen der ein Paar bildenden Empfangsspulen gebildet. Ein X-Kanal wird durch die Differenzbildung der Empfangssingale der in X-Richtung beabstandeten Spulen gebildet. Ein Y-Kanal wird durch die Differenzbildung der Empfangssignale der in Y-Richtung beabstandeten Spulen gebildet. Ein Z-Kanal wird durch die Differenzbildung der Empfangssignale einer in der einen Ebene liegenden Spule und einer in der anderen Ebene liegenden Spulen gebildet.

Ist die Welle in einer Mittelposition angeordnet, so liegt am Ausgang der jeweiligen Differenzbildung keine Spannung an. Je nach Verschiebung ändern die Amplituden sich mit der Lage der Welle. Zusammen ergeben diese beiden Werte eine vorzeichenbehaftete Regelspannung der entsprechenden Signale.

Die Welle weist eine Messsektion auf. Die Messsektion weist einen nicht rotationssymmetrischen Querschnitt und Bereiche mit einem größeren radialen Abstand und Bereiche mit einem kleineren radialen Abstand zur Drehachse auf, wobei ein von der Sendespule erzeugtes, durch die Stellung der Messsektion beeinflusstes, elektromagnetisches Feld von den Empfangsspulen empfangbar ist. Die Bereiche mit kleinerem Radius können auch als Einkerbungen bezeichnet werden. Ein Maß für die Drehstellung der Messsektion wird aufgrund der empfangenen Signale der Empfangsspulen bestimmt.

Es sind insbesondere eine erste Messsektion und eine zweite Messsektion vorhanden, wobei die erste Messsektion dem einen Empfangsspulenpaar der ersten Ebene und die zweite Messsektion der zweiten Ebene mit dem anderen Empfangsspulenpaar zugeordnet sind. Die Messsektionen können sich insbesondere in axialer Richtung angrenzend an die Ebenen mit den Empfangsspulen erstrecken, so dass eine axiale Verschiebung der Welle durch eine Signaländerung an den Empfangsspulen erfassbar ist. Zwischen den beiden Messsektionen weist die Welle vorzugsweise eine Zwischenpartie mir einer zylindrischen Umfangsfläche auf. In der Grundstellung der Welle erstreckt sich die Zwischenpartie bevorzugt zwischen den beiden Ebenen mit den Empfangsspulen. Die beiden Messsektionen können jeweils identische, aber um 90° verdrehte Profilquerschnitte aufweisen.

Dreht sich nun die Welle, so verändert sich zeitlich das elektromagnetische Feld im Hohlleiter. Treffen radial äußere Bereiche der Messsektion und die am nächsten zur Drehachse befindlichen Teilabschnitte der Empfangsspulen zusammen, so dass der radiale Abstand zwischen den Teilabschnitten und den Bereichen minimal ist, wird das elektromagnetische Feld dort geschwächt. Dies resultiert in einem lokalen Spannungsminimum des Empfangssignals, welches durch die Empfangsspule aus der elektromagnetischen Feldverteilung gemessen wird. Dreht sich die Messsektion weiter, so nimmt der Abstand zwischen den Bereichen und den Teilabschnitten zu und die Spannung des Empfangssignals nimmt ebenfalls zu und bildet ein lokales Spannungsmaximum. Der zeitliche Verlauf der Spannung des Empfangssignals bildet einen periodischen zeitlichen Verlauf. Bei einer Wellenumdrehung treten zwei Minima und zwei Maxima auf, wenn die Empfangsspulen je einen Teilabschnitt und die Messsektionen zwei Bereiche mit einem größeren radialen Abstand und zwei Bereiche mit einem kleineren radialen Abstand aufweisen. Bei einer anderen Formgebung der Messsektionen und der Empfangsspulen können mehr Maxima und Minima pro Wellenumdrehung beobachtet werden.

Im Folgenden wird nun eine bevorzugte Ausgestaltung der Erfindung anhand der Zeichnung und der dazugehörigen Beschreibung näher erläutert. In der Zeichnung zeigt:
- Fig. 1a: in einer quergeschnittenen Darstellung eine Hohlleiteranordnung mit der Welle geschnitten in einer Ebene A-A,
- Fig. 1b: in einer quergeschnittenen Darstellung die Hohlleiteranordnung mit der Messanordnung geschnitten in einer Ebene B-B,
- Fig. 1c: die Hohlleiteranordnung mit der Messanordnung geschnitten in einer Ebene C-C,
- Fig. 1d: in einer schematischen Schnittansicht eine Maschine mit einer Welle und einem Hohlleiter mit der Messanordnung,
- Fig. 2: in einer schematischen Darstellung eine Schaltungsanordnung der Messanordnung, und
- Fig. 3: in einer schematischen Darstellung eine weitere Schaltungsanordnung der Messanordnung.

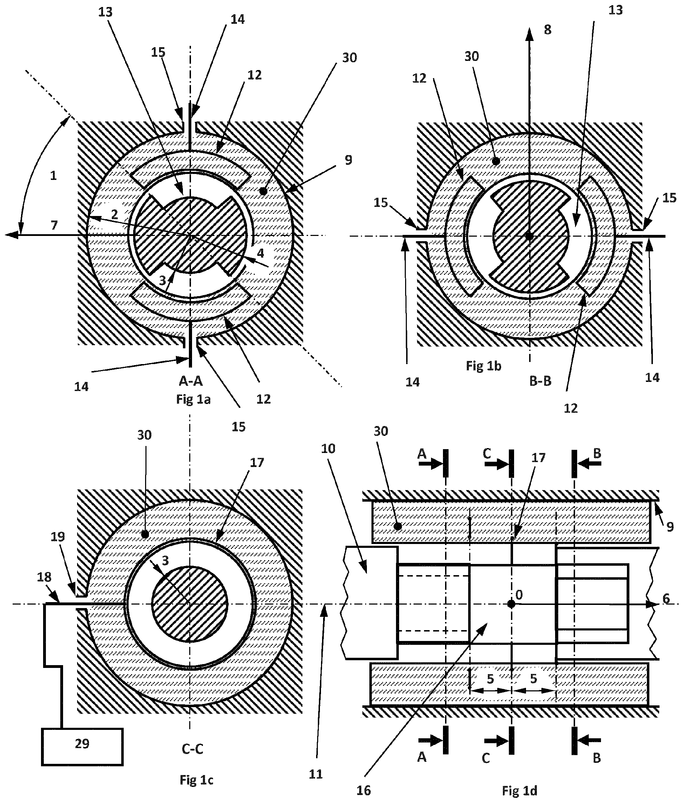

Im Folgenden darf ein in der Gesamtheit nicht näher bezeichnete Messanordnung zunächst anhand der Fig. 1a bis 1d beschrieben werden.

Eine Welle 10 ragt in den Hohlleiter hinein. Die Welle 10 ist hier in einem elektrisch leitenden Rohr angeordnet, welches nicht zwingend einen kreisförmigen Querschnitt aufweist. In Fig. 1a bis 1d weist dieses Rohr einen kreisrunden Querschnitt auf. Das Rohr weist einen Innenradius 2 auf. Eine Hohlleiterinnenwand 9 ist elektrisch gut leitend. Das Material um die Hohlleiterinnenwand 9 herum muss nicht zwingend elektrisch leitend sein.

Die Welle 10 weist eine Rotationsachse 11 auf. Die Rotationsachse 11 der Welle 10 bildet eine Z-Achse 6. Die Welle 10 dreht sich um die Rotationsachse 11 mit einer Drehzahl n. Die Welle 10 weist einen Wellenradius 4 und einen kleineren Wellenradius 3 in Bereich von umfänglich in zwei Messsektionen ausgebildeten Einkerbungen 13. Die Messsektionen sind durch eine zylindrische Zwischenpartie 16 bebabstandet. Die Zwischenpartie 16 ist rotationssymmetrisch ausgebildet und weist einen Radius 3 auf. Dieser Wellenradius 3 und der Wellenradius 4 sind kleiner als der Hohlleiterinnenradius 2. Links und rechts der Zwischenpartie 16 sind die beiden Messsektionen mit einem speziellen Profil ausgebildet. Jedes Profil besitzt eine punktsymmetrische Querschnittsform. Dies ist vorteilhaft, damit die Welle 10 bei der Rotation keine zusätzliche Unwucht erfährt. In der dargestellten Ausgestaltung besteht jedes Profil aus zwei Einkerbungen 13. Diese Einkerbungen 13 weisen den Radius 3 der mittleren Sektion auf. Ferner weisen die Profile einen Wellenaußenradius 4 auf, der größer ist als der Radius 3 der mittleren Sektion und kleiner ist als der Innenradius 2 der Hohlleiteranordnung. Jede Messsektion weist somit Bereiche mit einem kleineren Wellenradius 3 und Bereiche mit einem größeren Wellenradius 4 auf.

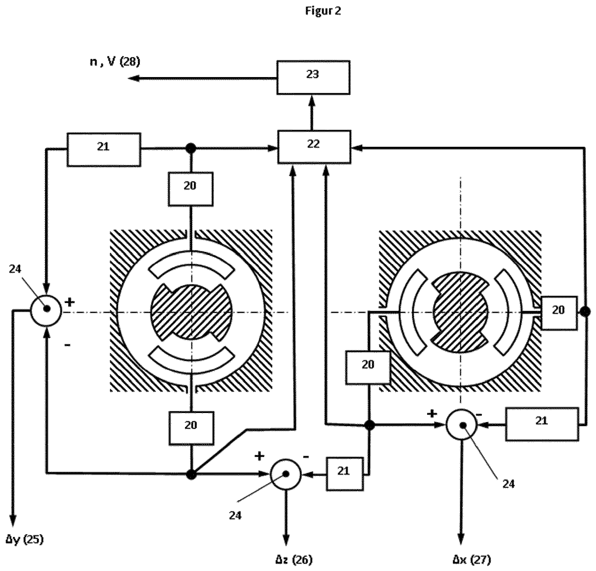

Die Einkerbung 13 erfolgt unter einem Winkel β, welcher in der dargestellten Ausgestaltung circa 45° beträgt. Es sind auch andere Werte für den Winkel β mit 0 < β < 90° denkbar. Bevorzugt sollte aber die Einkerbung 13 einen Winkel von ca. β = 45° aufweisen, damit ein deutlicher Signalpegelunterschied beim Drehen der Welle 10 an der Empfangsspule 12 auftritt. Ferner ist das Profil der rechten Messsektion um 90° gegenüber dem Profil der linken Messsektion gedreht. Der Grund liegt darin, dass mit dieser Anordnung gleichzeitig die Bewegung der Welle entlang der Z-Achse, wie auch die Bewegung entlang der X-Achse 7 und der Y-Achse 8 mit einem Differenznetzwerk, welches in Fig. 2 gezeigt ist, gemessen werden kann.

Die Hohlleiterinnenwand 9 und die Welle 10 bilden ein Hohlleitersystem. Eine Sendespule 17 erzeugt ein charakteristisches, elektromagnetisches Feld. Die Sendespule 17 befindet sich im Gleichgewichtszustand genau in der Mitte der Zwischenpartie 16. Die Sendespule 17 erstreckt sich dabei im Isolatormaterial 30 nahe der entsprechenden Innenwandung. Das Isolatormaterial 30 begrenzt eine zylindrische Aufnahme, in der sich die Welle 10 erstreckt. Das Isolatormaterial 30 kann beispielsweise durch ein Keramikmaterial oder dergleichen gebildet sein. Das Isolatormaterial 30 schützt die Sendespule 17 und die Empfangsspulen 12 vor Umgebungseinflüssen und hält diese an ihren Plätzen.

Der Gleichgewichtszustand ist dadurch gekennzeichnet, dass die Rotationsachse 11 der Welle 10 genau auf der Mittelachse des Hohlleiters, welche auch zugleich die Z-Achse 6 ist, zu liegen kommt, so dass die beiden Abstände 5 zu den beiden Messsektionen gleich sind. Damit ist die Welle 10 bezüglich der X- und Y-Abweichung und auch der Z-Abweichung zentriert. Der Abstand 5 ist auch zugleich der Abstand zwischen den Empfangsspulen 12 und der Sendespule 17. Dass die Kante der Profile bzw. der beiden äußeren Sektionen in derselben Ebene wie die Empfangsspule 12 liegt, ist nicht zwingend notwendig, aber zu bevorzugen.

Die Sendespule 17 ist mittels einer elektrischen Verbindung 18 mit einer Sendesignalerzeugung 29 verbunden. Die elektrische Verbindung 18 wird durch eine Öffnung 19 in der Hohlleiterinnenwand 9 geführt. Die Sendesignalerzeugung 29 erzeugt ein Signal mit einer konstanten Amplitude (CW) oder mit einer modulierten Amplitude (AM) jeweils mit einer Trägerfrequenz, deren Wert kleiner als die kleinste Grenzfrequenz des Hohlleitersystems ist.

Es sind vorzugsweise vier Empfangsspulen 12 vorhanden, deren Signale je über eine elektrische Verbindung 14 nach außen geführt werden. Die elektrischen Verbindungen 14 sind jeweils durch eine Öffnung 15 in der Hohlleiterinnwand 9 nach außen geführt. Auf beiden Seiten der Sendespule 17 sind je zwei Empfangsspulen 12 im gleichen Abstand 5 angeordnet. Jede Empfangsspule 12 ist als Drahtschlaufe mit einer Windung, welche ein Kreisbogensegment abdeckt, ausgebildet. Das Kreisbogensegment umschließt die Welle 10 nicht und ist auf die Größe der Öffnung der Einkerbung 13 angepasst. Das Kreisbogensegment und die Einkerbung haben bevorzugt den gleichen Öffnungswinkel. Es ist auch denkbar, dass der Öffnungswinkel des Kreisbogensegments der Drahtschlaufe und der Öffnungswinkel der Einkerbung verschieden sind. Auf jeder Seite sind die jeweiligen Empfangsspulen 12 symmetrisch gegenüberliegend zueinander angeordnet, wobei auch hier die linke Seite um 90° gegenüber der rechten Seite gedreht ist, wie es in Fig. 1 dargestellt ist.

Die Sendespule 17 umschließt bevorzugt die Zwischenpartie 16 als vorzugsweise kreisrunde Drahtschlaufe mit insbesondere einer Windung. Es wäre auch denkbar, dass die Sendespule 17 die Zwischenpartie 16 nicht umschließt und wie die Empfangsspulen 12 nur ein Segment abdeckt. Diese Anordnung ermöglicht eine bessere Montierbarkeit des Hohlleitersystems um die Welle 10 herum. Eingebettet sind die Empfangsspulen 12 und die Sendespulen 17 in das Isolatormaterial 30, welches keine elektrische Leitfähigkeit besitzt. Das Isolatormaterial 30 hat die Aufgabe, die Empfangsspulen 12 und die Sendespule 17 an ihren Plätzen zu halten und diese vor Umgebungseinflüssen zu schützen.

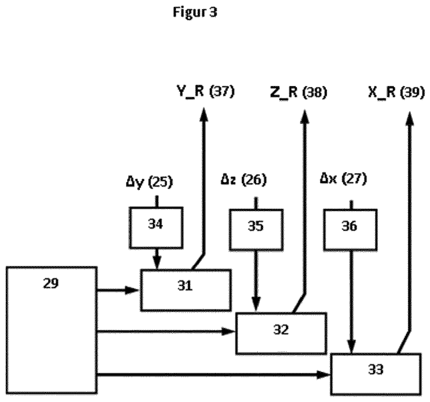

Außerhalb der Hohlleiterinnenwand 9 werden (vgl. Fig. 2 und 3) mit den nach außen geführten Signalen der vier Empfangsspulen 12 weitere Signale erzeugt. Zur Bildung jeweils eines Δy-Differentialsignals 25 für die Messung der Y-Abweichung werden die beiden entsprechenden Signale der Spulen 12 (vgl. Fig. 1a) voneinander subtrahiert. Dazu wird eine Differenzeinheit 24 verwendet. Damit im Gleichgewichtszustand der Signalpegel 0 am Ausgang der Differenzeinheiten 24 erscheint, müssen elektrische Abweichungen der Signalpfade voneinander mit Hilfe einer Phasen- und Amplituden-Kalibrieranordnung 21 kompensiert werden. Das Kalibrieren wird nur einmal bei der ersten Inbetriebnahme durchgeführt. Danach wird während der gesamten Betriebsdauer nur wenn notwendig nachkalibriert.

Am Ausgang der Empfangsspulen 12 ist je ein Bandpassfilter 20 angeordnet. Dieser dient dazu, Signalanteile herauszufiltern, welche im Frequenzbereich über die ganze Grenzfrequenz des Hohlleitersystems hinaus als Störsignal auftreten. Äußere Störsignale in einem Frequenzband unterhalb der kleinsten Grenzfrequenz des Hohlleitersystems werden durch die exponentiell abnehmende Störsignalstärke im Hohlleitersystem gedämpft. Der Bandpassfilter 20 dämpft diese Störsignale zusätzlich.

In selber Weise werden ein Δz-Differenzsignal 26 für die Abmessung der z-Abweichung und das Δx-Differenzsignal 27 für die Messung der x-Abweichung gebildet.

Durch die Drehung der Zwischenpartie 16 erfahren die Empfangsspulen 12 eine sich in der Signalstärke und im Takt der Drehzahl n variierende elektromagnetische Feldverteilung, die durch die Einkerbungen 13 verursacht wird. Die Empfangssignale der Empfangsspulen 12 sind im Takt der Drehzahl n moduliert. Dank dem Differenznetzwerk für die Bildung des Δy-Differenzsignals 25, des Δz-Differenzsignals 26 und des Δx-Differenzsignals 27 sind diese Signale von der Modulation nicht betroffen.

Von jeder der Empfangsspulen 12 wird ein Signalteil ausgekoppelt und zu einer Frequenzanalyse mit einem Fast-Fourier-Transformation-Algorithmus (FFT) zur Drehzahlbestimmung und zur Vibrationsüberwachung 22 geführt. Mit Hilfe der Fast-Fourier-Transformation werden die Signale einer spektralen Analyse unterzogen. Anhand des Spektrums kann die Drehzahl n, 28, sowie weitere Frequenzkomponenten, welche auf ein Vibrationsverhalten 28 hindeuten, bestimmt werden. Es werden vorzugsweise alle Signale der Empfangsspulen 12 zur spektralen Analyse hinzugezogen, damit die Wahrscheinlichkeit für eine genügend genaue Messung erhöht wird. Zudem hat diese Anordnung die Zusatzaufgabe, festzustellen, ob überhaupt ein elektromagnetisches Feld im Hohlleitersystem vorhanden ist. Ist die Sendespule 17 oder eine Baugruppe im Sendepfad defekt, so kann dies nur durch die Auswertung innerhalb der Frequenzanalyse 22 festgestellt werden. Das Differenznetzwerk ist in diesem Fall nicht eindeutig, ob kein Sendesignal vorhanden ist oder ob der gewünschte Gleichgewichtszustand herrscht. Die Differenzsignale 25, 26 und 27 werden mit den Demodulatoren mit Tiefpassfilter 31, 32 und 33 demoduliert und bilden dann die Regelsignale Y_R 37, Z_R 38 und X_R 39.

Mit den Phasen und Amplituden-Kalibrieranordnungen 34, 35, 36 werden die elektrischen Eigenschaften der Zuleitung so angepasst, dass durch die Demodulation das Vorzeichen der jeweiligen Differenzsignale 25, 26 und 27 erhalten bleibt.

### Bezugszeichenliste:

- 1: Winkel β
- 2: Hohlleiterinnenradius
- 3: kleinerer Wellenradius
- 4: größerer Wellenradius
- 5: Abstand der Sendespule zu den Empfangsspulen
- 6: Z-Achse
- 7: X-Achse
- 8: Y-Achse
- 9: Hohlleiterinnenwand
- 10: Welle
- 11: Rotationsachse der Welle
- 12: Empfangsspulen
- 13: Einkerbung
- 14: Elektrische Verbindung der Empfangsspule
- 15: Öffnung in Hohlleiterwand
- 16: Zwischenpartie
- 17: Sendespule
- 18: Elektrische Verbindung zur Speisung der Sendespule
- 19: Öffnung für elektrische Verbindung
- 20: Bandpassfilter
- 21: Kalibrieranordnung
- 22: Frequenzanalyse
- 23: Auswerteeinheit
- 24: Differenzeinheit
- 25: Δy-Differenzsignal
- 26: Δz-Differenzsignal
- 27: Δx-Differenzsignal
- 28: Signal mit Information zur Drehzahl und der Vibration der Welle
- 29: Sendesignalerzeugung
- 30: Isolatormaterial
- 31: Tiefpassfilter für Differenzsignal Δy
- 32: Tiefpassfilter für Differenzsignal Δz
- 33: Tiefpassfilter für Differenzsignal Δx
- 34: Kalibrierungsanordnung für Differenzsignal Δy
- 35: Kalibrierungsanordnung für Differenzsignal Δz
- 36: Kalibrierungsanordnung für Differenzsignal Δx
- 37: Regelsignal Y_R
- 38: Regelsignal Z_R
- 39: Regelsignal X_R

## Patentansprüche

1. Messanordnung zur Messung einer Position und einer Drehzahl einer Welle (10), mit einer Sendespule (17), mehreren Empfangsspulen (12), einer Sendeeinheit, einem Hohlleiter sowie einer Welle (10), wobei die Welle (10) um eine Drehachse drehbar ist und mindestens eine Messsektion aufweist, wobei mit der Sendespule (17) ein elektromagnetisches Feld erzeugbar ist, wobei mittels der Sendeeinheit ein elektrisches Signal erzeugbar ist, wobei das elektrische Signal an der Sendespule (17) anliegt, wobei die mindestens eine Messsektion einen nicht rotationssymmetrischen Querschnitt aufweist und Bereiche mit einem größeren Wellenradius (4) und Bereiche mit einem kleineren Wellenradius (3) aufweist, wobei das von der Sendespule (17) erzeugte, durch die mindestens eine Messsektion beeinflusste, elektromagnetische Feld von mehreren der Empfangsspulen (12) empfangbar ist, wobei ein Maß für die Drehstellung der Welle (10) aufgrund der Änderung eines empfangenen Signals der Empfangsspulen (12) und ein Maß für die radiale Position und/oder der axialen Position der Welle (10) bestimmbar ist, wobei die Sendespule (17) und die Empfangsspulen (12) sowie die mindestens eine Messsektion im Hohlleiter angeordnet sind, wobei eine Trägerfrequenz des elektrischen Signals unterhalb einer kleinsten Grenzfrequenz des Hohlleiters liegt, wobei die Empfangsspulen (12) sich abschnittsweise kreisbogensegmentförmig um die Welle (10) erstrecken, wobei jede Empfangsspule (12) als Drahtschlaufe mit nur einer Windung ausgeführt ist.

2. Messanordnung nach Anspruch 1, **dadurch gekennzeichnet, dass** die Sendespule (17) nur eine Windung aufweist.

3. Messanordnung nach Anspruch 1 oder 2, **dadurch gekennzeichnet, dass** zur Bestimmung der radialen Position in einer ersten radialen Richtung (X-Richtung) zwei Empfangsspulen (12) in einer radialen Ebene diametral in X-Richtung beabstandet zur Welle (10) angeordnet sind und zur Bestimmung der radialen Position in einer zweiten radialen Richtung (Y-Richtung) zwei weitere Empfangsspulen (12) in einer radialen Ebene diametral in Y-Richtung beabstandet zur Welle (10) angeordnet sind.

4. Messanordnung nach einem der vorstehenden Ansprüche, mit einer Differenzeinheit (24), mittels derer Differenzsignale aus den Signalen der ein Paar bildenden Empfangsspulen (12) bildbar sind.

5. Messanordnung nach einem der vorstehenden Ansprüche, wobei die Welle (10) mehrere Messsektionen mit jeweils mehreren Einkerbungen (13) aufweist, wobei die Einkerbungen (13) Bereiche mit einem kleineren Wellenradius (3) bilden.

6. Messanordnung nach Anspruch 5, **dadurch gekennzeichnet, dass** die Einkerbungen (13) einen Winkel β (1) aufweisen, wobei die Empfangsspulen (12) sich kreisbogensegmentförmig in Umfangsrichtung erstrecken und das Kreisbogensegment einen Öffnungswinkel zwischen β=0° und β=+90° aufweist, wobei β vorzugsweise gleich 45° ist.

7. Messanordnung nach einem der vorstehenden Ansprüche, **dadurch gekennzeichnet, dass** zwei Messsektionen vorhanden sind, wobei ein Paar von Empfangsspulen (12) der einen Messsektion und ein Paar von Empfangsspulen (12) der anderen Messsektion zugeordnet sind.

8. Messanordnung nach einem der vorstehenden Ansprüche, **dadurch gekennzeichnet, dass** die Sendespule (17) die Welle (10) nur teilweise umgreift.

9. Messanordnung nach einem der vorstehenden Ansprüche 1 bis 7, **dadurch gekennzeichnet, dass** die Sendespule (17) die Welle (10) vollständig umgreift.

10. Messanordnung nach einem der vorstehenden Ansprüche, **dadurch gekennzeichnet, dass** die Sendespule (17) und/oder die Empfangsspulen (12) in ein Isolatormaterial (30) eingebettet sind.

11. Messanordnung nach einem der vorstehenden Ansprüche, **dadurch gekennzeichnet, dass** die Welle (10) durch ein Magnetlager gelagert ist.

12. Messanordnung nach einem der vorstehenden Ansprüche, welche Mittel aufweist, um mittels einer Fast-Fourier-Transformation eine Drehzahl und Vibrationen der Welle (10) in einer Frequenzanalyse (22) zu bestimmen.

## Claims

1. Measuring arrangement for measuring a position and a rotation speed of a shaft (10), comprising a transmitting coil (17), a plurality of receiving coils (12), a transmitting unit, a hollow conductor and also a shaft (10), wherein the shaft (10) can rotate about a rotation axis and has at least one measuring section, wherein an electromagnetic field can be generated by the transmitting coil (17), wherein an electrical signal can be generated by means of the transmitting unit, wherein the electrical signal is applied to the transmitting coil (17), wherein the at least one measuring section has a cross section which is not rotationally symmetrical and has regions with a relatively large shaft radius (4) and regions with a relatively small shaft radius (3), wherein the electromagnetic field which is generated by the transmitting coil (17) and is influenced by the at least one measuring section can be received by a plurality of the receiving coils (12), wherein a measure for the rotational position of the shaft (10) owing to the change in a received signal of the receiving coils (12) and a measure for the radial position and/or the axial position of the shaft (10) can be determined, wherein the transmitting coil (17) and the receiving coils (12) and also the at least one measuring section are arranged in the hollow conductor, wherein a carrier frequency of the electrical signal lies below a minimum limit frequency of the hollow conductor, wherein the receiving coils (12) extend in the form of a segment of an arc of a circle around the shaft (10) in portions, wherein each receiving coil (12) is designed as a wire loop with only one turn.

2. Measuring arrangement according to Claim 1, **characterized in that** the transmitting coil (17) has only one turn.

3. Measuring arrangement according to Claim 1 or 2, **characterized in that**, for the purpose of determining the radial position in a first radial direction (X direction), two receiving coils (12) are arranged in one radial plane diametrically at a distance from the shaft (10) in the X direction and, for the purpose of determining the radial position in a second radial direction (Y direction), two further receiving coils (12) are arranged in one radial plane diametrically at a distance from the shaft (10) in the Y direction.

4. Measuring arrangement according to one of the preceding claims, having a differential unit (24) by means of which differential signals can be formed from the signals of the receiving coils (12) forming a pair.

5. Measuring arrangement according to one of the preceding claims, wherein the shaft (10) has a plurality of measuring sections each with a plurality of notches (13), wherein the notches (13) form regions with a relatively small shaft radius (3).

6. Measuring arrangement according to Claim 5, **characterized in that** the notches (13) include an angle β (1), wherein the receiving coils (12) extend in the form of a segment of an arc of a circle in the circumferential direction and the segment of an arc of a circle includes an opening angle of between β = 0° and β = +90°, where β is preferably equal to 45°.

7. Measuring arrangement according to one of the preceding claims, **characterized in that** there are two measuring sections, wherein one pair of receiving coils (12) are associated with one measuring section and one pair of receiving coils (12) are associated with the other measuring section.

8. Measuring arrangement according to one of the preceding claims, **characterized in that** the transmitting coil (17) engages around the shaft (10) only partially.

9. Measuring arrangement according to one of the preceding Claims 1 to 7, **characterized in that** the transmitting coil (17) engages around the shaft (10) completely.

10. Measuring arrangement according to one of the preceding claims, **characterized in that** the transmitting coil (17) and/or the receiving coils (12) are/is embedded into an insulator material (30).

11. Measuring arrangement according to one of the preceding claims, **characterized in that** the shaft (10) is mounted by a magnetic bearing.

12. Measuring arrangement according to one of the preceding claims, which has means for determining a rotation speed and vibrations of the shaft (10) by frequency analysis (22) by means of a fast Fourier transform.

## Revendications

1. Arrangement de mesure destiné à mesurer une position et une vitesse de rotation d'un arbre (10), comprenant une bobine d'émission (17), plusieurs bobines de réception (12), une unité d'émission, un guide d'ondes ainsi qu'un arbre (10), l'arbre (10) pouvant tourner autour d'un axe de rotation et possédant au moins une section de mesure, un champ électromagnétique pouvant être généré avec la bobine d'émission (17), un signal électrique pouvant être généré au moyen de l'unité d'émission, le signal électrique étant appliqué à la bobine d'émission (17), l'au moins une section de mesure possédant une section transversale sans symétrie rotationnelle et possédant des zones ayant un grand rayon d'arbre (4) et des zones ayant un petit rayon d'arbre (3), le champ électromagnétique généré par la bobine d'émission (17) et influencé par l'au moins une section de mesure pouvant être reçu par plusieurs des bobines de réception (12), une mesure pour la position rotationnelle de l'arbre (10) pouvant être déterminée en raison de la modification d'un signal reçu des bobines de réception (12), ainsi qu'une mesure pour la position radiale et/ou de la position axiale de l'arbre (10), la bobine d'émission (17) et les bobines de réception (12) ainsi que l'au moins une section de mesure étant disposées dans le guide d'ondes, la fréquence porteuse du signal électrique se trouvant au-dessous d'une plus petite fréquence limite du guide d'ondes, les bobines de réception (12) s'étendant par portions en forme de segments d'arc de cercle autour de l'arbre (10), chaque bobine de réception (12) étant réalisée sous la forme d'une boucle de fil avec un seul enroulement.

2. Arrangement de mesure selon la revendication 1, **caractérisé en ce que** la bobine d'émission (17) ne possède qu'un seul enroulement.

3. Arrangement de mesure selon la revendication 1 ou 2, **caractérisé en ce que** pour la détermination de la position radiale dans une première direction radiale (direction X), deux bobines de réception (12) sont disposées dans un plan radial espacées diamétralement de l'arbre (10) dans la direction X et pour la détermination de la position radiale dans une deuxième direction radiale (direction Y), deux bobines de réception (12) supplémentaires sont disposées dans un plan radial espacées diamétralement de l'arbre (10) dans la direction Y.

4. Arrangement de mesure selon l'une des revendications précédentes, comprenant une unité différentielle (24) au moyen de laquelle peuvent être formés des signaux différentiels à partir des signaux des bobines de réception (12) formant une paire.

5. Arrangement de mesure selon l'une des revendications précédentes, l'arbre (10) possédant plusieurs sections de mesure comportant respectivement plusieurs encoches (13), les encoches (13) formant des zones ayant un petit rayon d'arbre (3) .

6. Arrangement de mesure selon la revendication 5, **caractérisé en ce que** les encoches (13) présentent un angle β (1), les bobines de réception (12) s'étendant en forme de segment d'arc de cercle dans la direction périphérique et le segment d'arc de cercle présentant un angle d'ouverture entre β = 0° et β = +90°, β étant de préférence égal à 45°.

7. Arrangement de mesure selon l'une des revendications précédentes, **caractérisé en ce que** deux sections de mesure sont présentes, une paire de bobines de réception (12) étant associée à une section de mesure et une paire de bobines de réception (12) étant associée à l'autre section de mesure.

8. Arrangement de mesure selon l'une des revendications précédentes, **caractérisé en ce que** la bobine d'émission (17) n'entoure l'arbre (10) que partiellement.

9. Arrangement de mesure selon l'une des revendications 1 à 7, **caractérisé en ce que** la bobine d'émission (17) entoure l'arbre (10) entièrement.

10. Arrangement de mesure selon l'une des revendications précédentes, **caractérisé en ce que** la bobine d'émission (17) et/ou les bobines de réception (12) sont enrobées dans un matériau isolant (30).

11. Arrangement de mesure selon l'une des revendications précédentes, **caractérisé en ce que** l'arbre (10) est supporté par un palier magnétique.

12. Arrangement de mesure selon l'une des revendications précédentes, lequel possède des moyens afin de déterminer une vitesse de rotation et des vibrations de l'arbre (10) dans une analyse de fréquences (22) au moyen d'une transformée de Fourier rapide.
